# EUROPEAN PATENT APPLICATION

(11) **EP 4 699 931 A1**
(43) Date of publication of application: **25.02.2026**
(21) Application number: 25196397.1
(22) Date of filing: 18.08.2025
(51) Int. Cl.: B64C 1/40, B32B 27/12

(54) **INSULATING BAG FOR AN AIRCRAFT AND METHOD FOR PRODUCING AN INSULATING BAG**

(30) Priority: 21.08.2024 LU 103359
(71) Applicant: AIRBUS Operations GmbH, 21129 Hamburg (DE)
(72) Inventor: MACHUNZE, Wolfgang, 82024 Taufkirchen (DE); BONACCURSO, Elmar, 82024 Taufkirchen (DE); HELWIG, Andreas, 82024 Taufkirchen (DE); WITTE, Tassilo, 21129 Hamburg (DE); KAYSSER, Simon, 21129 Hamburg (DE); RITSCHEL, Maximilian, 21129 Hamburg (DE)

(57) **Abstract**

The present disclosure relates to an insulating bag (100) for an aircraft. The insulating bag (100) comprises an insulation material (150) and a packaging foil (110) that comprises a thermoplastic polymer foil (113) and a fibre reinforcement (115) made from the same thermoplastic polymer as the foil (113). Further disclosed are an aircraft having such insulating bag (100) and a method of producing such insulating bag (100).

## Description

The present disclosure generally relates to an insulating bag for an aircraft, an aircraft comprising the same, and a method of producing an insulating bag. Particularly, the present disclosure relates to an insulating bag including a packaging foil comprising a thermoplastic polymer foil and a fibre reinforcement made from the same thermoplastic polymer as the foil. The present disclosure further relates to an aircraft including at least one such insulating bag to cover an aircraft structure, and a method of producing such insulating bag.

A conventional insulation used in an aircraft comprises glass wool or a similar porous material, that is arranged, for example, at an outer primary structure of the fuselage of the aircraft, in order to insulate the interior cabin of the aircraft from the ambient environment. Since such insulation is regularly exposed to humidity, particularly as a dew point is easily located inside of the insulation of an aircraft fuselage, the glass wool can be covered by a multilayer foil.

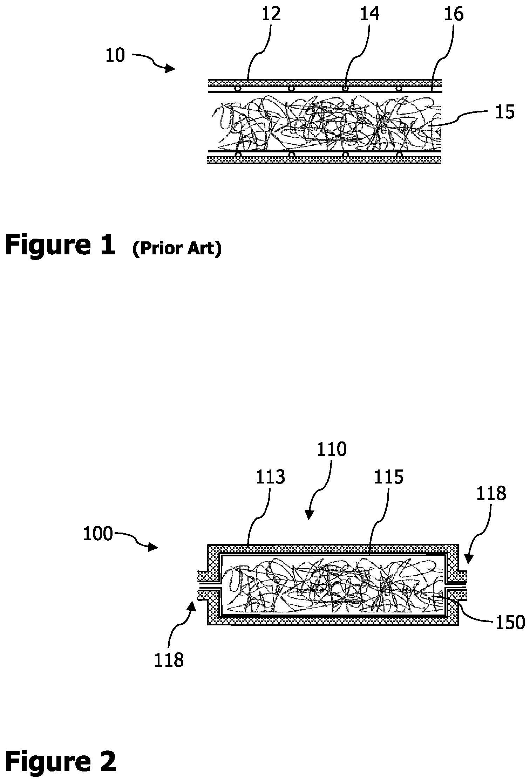

Figure 1 schematically illustrates an exemplary bagged insulation 10, including a porous material 15, such as glass wool, which is wrapped by a foil 12. During installation of such bagged insulation 10 as well as during flight of the aircraft, the insulation 10 is subject of mechanical loads and wear. In order to avoid that the foil 12 tears apart or gets slit, and the glass wool 15 would fall out, the foil 12 is reinforced with glass or nylon fibres 14. The fibres 14 are bonded to the foil 12 with an adhesive film 16.

Such multilayer insulation 10 provided on both sides of the insulation 15, however, adds weight to the aircraft. Specifically, due to the large area of insulation required for the fuselage of the aircraft, the overall weight of the protective insulation foil 12, 14, 16 has a negative influence on the fuel consumption of the aircraft.

It is therefore an object of the present disclosure to provide an improved insulation for an aircraft, particularly a lightweight insulation.

This object is solved by the present invention as defined in the independent claims. Preferred embodiments are defined by the dependent claims.

According to a first aspect to better understand the present disclosure, an insulating bag for an aircraft comprises an insulation material, and a packaging foil covering the insulation material. The insulation material can be made from or comprise glass fibres, nylon fibres, a foam or similar porous material. In case of fibres, the insulation material can be woven, nonwoven or can have another fleece-like structure.

Furthermore, the packaging foil comprises a thermoplastic polymer foil and a fibre reinforcement made from the same thermoplastic polymer as the foil. Thus, on the one hand, the packaging foil is reinforced and provides a high resilience against mechanical influence, for example, it has a high tensile strength for handling and installation as well as a resilience against mechanical wear during operation of the aircraft. On the other hand, the packaging foil does not require an adhesive film as the conventional insulation foil, which reduces the overall weight of the packaging foil.

Moreover, since the thermoplastic polymer foil and the fibre reinforcement are made from the same thermoplastic polymer, the packaging foil can easily be recycled. In more detail, compared to a conventional insulation foil having at least three different materials bonded to one another, which can only be burned or disposed in a landfill, the mono-material packaging foil of the present disclosure can be reused and recycled. The thermoplastic properties of the reinforced foil can be maintained in this recycling process, so that the recycled foil can form the basis for a new foil as well as a new fibre reinforcement.

In an implementation variant, the fibre reinforcement can comprise a mesh, woven fibres, nonwoven fibres, a textile, or a tissue. In any case, a tensile strength of the packaging foil is increased due to the tensile strength of the fibre reinforcement being higher than that of the thermoplastic polymer foil alone.

In an implementation variant, the mesh can have a strand pitch between 3 mm and 30 mm, preferably between 5 mm and 20 mm, and most preferably of 10 mm. The strand pitch corresponds to a distance of two adjacent strands, i.e. directly neighbouring strands of the mesh in one direction. It is to be understood that the mesh can have the same strand pitch in both directions (usually rectangular to one another). Alternatively, different strand pitches can be employed, for example, if different tensile properties of the packaging foil are required in two directions. Likewise, a mesh having strands oriented at an angle deviating from 90° is likewise possible, i.e. a rhomb-shaped mesh.

In an implementation variant, the thermoplastic polymer foil and the fibre reinforcement can be each made from one material from the list consisting of polyether ether ketone, PEEK, polyethylene terephthalate, PET, poly(p-phenylene sulfide), PPS, polyamide, PA, polycarbonate, PC, polyether sulfone, PESU, and polyaryletherketone, PAEK. In other words, the thermoplastic polymer foil as well as the fibre reinforcement are made from the same one material chosen from the above list.

According to a second aspect to better understand the present disclosure, an aircraft comprises an aircraft structure, and at least one insulating bag arranged at or over the aircraft structure of the first aspect or one or more of its variants.

In an implementation variant, the aircraft structure can be one from the list consisting of a frame, a stringer, an outer skin, a sidewall, a ceiling panel, a passenger floor panel, and a pipe or duct. Thus, the insulating bag functions as a primary acoustic insulation system and/or as a primary thermal insulation system.

According to a third aspect to better understand the present disclosure, a method of producing an insulating bag comprises generating a foil from a specific thermoplastic polymer, generating a fibre reinforcement from the specific thermoplastic polymer, and forming a packaging foil by bonding the foil and the fibre reinforcement. Thereafter, the method continues with packing an insulation material into the packaging foil.

Thus, forming the packaging foil is easier and faster (and, hence, more cost-effective) compared to a conventional production method including placing glass or nylon fibres on a foil and applying an adhesive film to bond the fibres to the foil. The forming of the packaging foil can be achieved in a single method step, since the foil and the fibre reinforcement are made from the same specific thermoplastic polymer that can be easily bonded to one another due to the same material characteristics.

In an implementation variant, the packing (of the insulation material into the packaging foil) can comprise providing a lower packaging foil underneath the insulation material, covering the insulation material with an upper packaging foil, and bonding the upper and lower packaging foils at a circumference of the insulation material to form the insulating bag in the shape of an insulation blanket or cushion. Thus, the insulating bag can be shaped in accordance with the location to be insulated as well as with respect to a size and weight that can be easily handled by workers.

In an implementation variant, the packing can further comprise cutting the packaging foil around the circumference of the insulation material. This allows producing an insulating bag in a required size for its installation space, and avoiding excess packaging foil around the insulation material.

In an implementation variant, the forming of the packaging foil can comprise applying heat and pressure on the thermoplastic polymer foil and the fibre reinforcement. For instance, the foil and fibre reinforcement can be placed on top of each other and a press acts thereon. By introducing heat, for example, via the press, the thermoplastic material melts and bonds the foil and fibre reinforcement together without the necessity of an adhesive film. As a mere example, the foil and fibre reinforcement can each be unwound from a roll or the like and can enter a roller press that can optionally be heated. This allows producing the packaging foil in a continuous manner.

In an implementation variant, the packaging foil can be exposed to a temperature of 100°C to 400°C, preferably 200°C to 400°C, and a pressure of 0,3 N/mm² to 10 N/mm² or 0,3 N/mm² to 2 N/mm².

In an implementation variant, the generating of the fibre reinforcement can comprise applying a stretching process to the thermoplastic polymer, so that molecular chains of the thermoplastic polymer are oriented. Due to the orientation of the thermoplastic polymer chains, the tensile strength in the direction of this orientation is increased.

In an implementation variant, the method can further comprise dismantling the insulating bag and removing the insulating material from the packaging foil, mechanically dividing the packaging foil, and providing the divided packaging foil for generating the foil and the fibre reinforcement. In other words, the packaging foil consisting of only one thermoplastic polymer material can be recycled, and reused as it can form a basis for the first method steps where the foil and fibre reinforcement are generated.

As a mere example, mechanically dividing the packaging foil can include shredding or tearing the packaging foil into small pieces or granulate material (granules, pellets or the like). Such small pieces (or granulate material) can then be reintroduced into the process of generating the foil and generating the fibre reinforcement from the same specific thermoplastic polymer.

In an implementation variant the method can further comprise thermally treating the packaging foil and/or the small pieces thereof.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a conventional bagged insulation, according to the prior art;
- Figure 2: schematically illustrates an exemplary insulating bag, according to the present disclosure;
- Figure 3: schematically illustrates steps of a method of producing an insulating bag; and
- Figure 4: schematically illustrates steps of a method of recycling an insulating bag.

In the following description, for purposes of explanation and not limitation, specific details are set forth in order to provide a thorough understanding of the present disclosure. It will be apparent to one skilled in the art that the present disclosure may be practiced in other implementations that depart from these specific details.

Figure 2 schematically illustrates an exemplary insulating bag 100 for an aircraft, according to the present disclosure. Specifically, the insulating bag 100 comprises an insulation material 150 covered by a packaging foil 110. The insulation material 150 can be made from or can comprise glass fibres, nylon fibres, a foam or similar porous material. In case of fibres, the insulation material can be woven, nonwoven or can have another fleece-like structure. The insulation material 150 can also be a conventional insulation material.

The packaging foil 110 comprises a thermoplastic polymer foil 113 (illustrated in Figure 2 as a hashed package) and the fibre reinforcement 115, which are both made from the same specific thermoplastic polymer. It is to be understood that the dimensions of the thermoplastic polymer foil 113 and the fibre reinforcement 115 in Figure 2 are for illustrative purposes only. It is likewise possible that the thermoplastic polymer foil 113 is thinner than the fibre reinforcement 115, or alternatively is thicker or has an equal thickness. It is further to be understood that the thermoplastic polymer foil 113 and the fibre reinforcement 115 are illustrated separate from one another for illustrative purposes only, but that both elements, particularly as used in the insulating bag 100, are bonded to one another, i.e. form a composite component.

The fibre reinforcement 115 can comprise a mesh, woven fibres, nonwoven fibres, a textile or a tissue. A textile can also be considered as a woven fibre or a non-woven fibre, while a tissue can be like a foil. Such tissue (foil) can be continuous or can have openings, such as a net or mesh.

The thermoplastic polymer foil 113 and the fibre reinforcement 115 can be each made from one material from the list consisting of polyether ether ketone, PEEK, polyethylene terephthalate, PET, poly(p-phenylene sulfide), PPS, polyamide, PA, and polycarbonate, PC. In other words, the thermoplastic polymer foil 113 as well as the fibre reinforcement 115 are made from the same one material chosen from the above list.

The insulating bag 100 can be made from a lower packaging foil 110 and an upper packaging foil 110 with the insulation material 150 therebetween. The upper and lower packaging foils 110 can be bonded at a circumference of the insulation material 150. This bonding forms a closure or encapsulation 118 at at least two sides of the insulating bag 100.

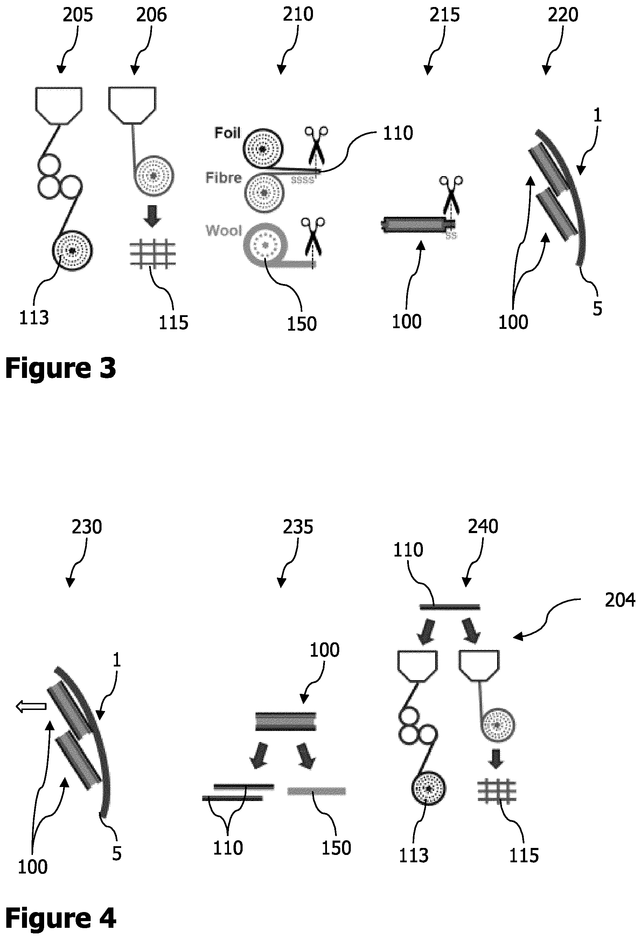

Figure 3 schematically illustrates steps of a method of producing an insulating bag 100. The method begins in step 205 with generating a foil 113 from a specific thermoplastic polymer. As a mere example, the thermoplastic polymer foil 113 can be wound on a roll for later use as illustrated. In step 206, a fibre reinforcement 115 is generated from the same specific thermoplastic polymer. The fibre reinforcement 115 can likewise be wound on a roll for later use as illustrated.

As a mere example, Figure 3 illustrates that the fibre reinforcement 115 is generated in form of a mesh. In this particular example the fibre reinforcement 115 can have a strand pitch between 3 mm and 30 mm, preferably between 5 mm and 20 mm, and most preferably can have a strand pitch of 10 mm. Alternatively, the fibre reinforcement 115 can be a fleece, textile, foil or the like.

It is to be understood that steps 205 and 206 can be performed in an order opposite to the one illustrated or at the same time.

In any case, in step 210, a packaging foil 110 is formed by bonding the foil 113 and the fibre reinforcement 115. This forming of the packaging foil in step 210 can include applying heat and/or pressure to the thermoplastic polymer foil. Due to the thermoplastic characteristics of the foil 113 and fibre reinforcement 115, which are the same, applying heat softens or (at least partially) melts the foil 113 and fibre reinforcement 115, for example, at their respective surfaces. This allows bonding the foil 113 and the fibre reinforcement 115 to one another. As a mere example, any softened or melted parts of the foil 113 and fibre reinforcement 115 are merged, so that both components 113, 115 are adhered and bonded to one another, once they are cooled down.

Figure 3 schematically illustrates in the same step 210 the cutting of an insulation material 150. It is to be understood that this preparation of an insulation material 150 can be performed at a different time, i.e., irrespective and independent of forming the packaging foil 110. Alternatively, the insulation material 150 can be provided in pieces having a size required for the intended purpose. Thus, the cutting of the insulation material 150 is only optional and not required for the disclosed method.

In any case, in step 215, the insulation material 150 is packed into the packaging foil 110. For example, the insulation material 150 can be wrapped into the packaging foil 110. Furthermore, a lower packaging foil underneath the insulation material 150 can be provided, and an upper packaging foil can cover the insulation material 150. Thereafter, the upper and lower packaging foil 110 can be bonded to one another at a circumference of the insulation material 150. Thus, an insulating bag 100 is formed in the shape of an insulation blanket or cushion.

It is to be understood that the packaging foil 110 can be provided as one web or line, and the insulation material 150 can be placed on top of a half of this web or line. The other half of the packaging foil 110 is then folded on top of the insulation material 150. Thus, bonding of the packaging foil 110 is only required on three sides of the insulation material 150.

Furthermore, as another example, the packaging foil 110 can be provided as a tube or hose, into which the insulation material 150 can be packed. Thus, forming the insulating bag 100 requires only bonding the packaging foil 110 at two ends of the insulation material 150.

It is to be understood that the insulating bag 100 can have any desired shape, including a rectangular, square, circular, elliptical or polygonal shape.

Finally, in step 220, the insulating bag 100 can be arranged at or over an aircraft structure, such as at a frame 5 of an aircraft 1 illustrated in Figure 3 as one possible example. For instance, one or more insulating bags 100 can be placed between adjacent frames 5 to insulate the outer skin (not illustrated) of the aircraft 1. Likewise, one or more insulating bags 100 can be arranged over each frame 5, in order to provide a continuous insulation of the primary structure of the aircraft.

It is to be understood that the insulating bags 100 can be placed anywhere in the aircraft 1, where a thermal and/or acoustic insulation is required.

Figure 4 schematically illustrates steps of a method of recycling an insulating bag 100. In step 230, one or more insulating bags 100 arranged in an aircraft 1 are removed (illustrated schematically by a wide arrow).

Thereafter, in step 235, the insulating bag 100 is dismantled. As a mere example, the packaging foil 110 can be cut, in order to reach into the bag 100, and the insulating material 150 is removed from the packaging foil 110. In other words, the insulating material 150 is taken out of insulating bag 100 and is separated from the packaging foil 110.

In step 240, the packaging foil 110 is mechanically divided. This can be achieved by shredding or tearing apart the packaging foil 110.

Finally, the small pieces of packaging foil 110 can be provided, in step 204, for a subsequent generating of a foil 113 and/or fibre reinforcement 115. Such generating corresponds to steps 205 and 206 of Figure 3, respectively. Thus, the method of Figure 3 can start again, and the thermoplastic polymer material of the packaging foil 110 can be fully recycled.

The insulation material 150 can likewise be reused or recycled.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method of producing an insulating bag (100), the method comprising:
generating (205) a foil (113) from a specific thermoplastic polymer;
generating (206) a fibre reinforcement (115) from the specific thermoplastic polymer;
forming (210) a packaging foil (110) by bonding the foil (113) and the fibre reinforcement (115); and
dismantling (235) the insulating bag (100) and removing the insulating material (150) from the packaging foil (110);
mechanically dividing (240) the packaging foil (110); and
providing (204) the divided packaging foil (110) for generating (205, 206) the foil (113) and the fibre reinforcement (115).

2. The method of claim 1, wherein the packing (215) comprises:
providing a lower packaging foil (110) underneath the insulation material (150);
covering the insulation material (150) with an upper packaging foil (110); and
bonding the upper and lower packaging foils (110) at a circumference of the insulation material (150) to form the insulating bag (100) in the shape of an insulation blanket or cushion.

3. The method of claim 1 or 2, wherein the forming (210) of the packaging foil comprises applying heat and pressure on the thermoplastic polymer foil (113) and the fibre reinforcement (115), wherein, preferably, the packaging foil (215) and the fibre reinforcement (115) is exposed to a temperature of 200°C to 400°C and a pressure of 0,3 N/mm² to 10 N/mm².

4. The method of one of claims 1 to 3, wherein the generating (206) of the fibre reinforcement (115) comprises applying a stretching process to the thermoplastic polymer, so that molecular chains of the thermoplastic polymer are oriented.

5. The method of any of the preceding claims, wherein the packaging foil (110) comprises a thermoplastic polymer foil (113) and a fibre reinforcement (115) made from the same thermoplastic polymer as the foil (113).

6. The method of any of the preceding claims, wherein the fibre reinforcement comprises a mesh (115), woven fibres, nonwoven fibres, a textile, or a tissue.

7. The method of any of the preceding claims, wherein the mesh (115) has a strand pitch between 3 mm and 30 mm, preferably between 5 mm and 20 mm, and most preferably of 10 mm.

8. The method of any of the preceding claims, wherein the thermoplastic polymer foil (113) and the fibre reinforcement (115) are each made from one material from the list consisting of polyether ether ketone, PEEK, polyethylene terephthalate, PET, poly(p-phenylene sulfide), PPS, polyamide, PA, polycarbonate, PC, polyethersulfone, PESU, and polyaryletherketone, PAEK.

9. An aircraft (1), comprising:
an aircraft structure (5); and
at least one insulating bag (100) obtainable by the method of any of the preceding claims arranged at or over the aircraft structure (5).

10. The aircraft (1) of claim 9, wherein the aircraft structure (5) is one or more from the list consisting of a frame, a stringer, an outer skin, a sidewall, a ceiling panel, a passenger floor panel, and a pipe or duct.
